# FASCICULE DE BREVET EUROPEEN

(11) **EP 3 538 338 B1**
(45) Date de publication et mention de la délivrance du brevet: **20.10.2021**
(21) Numéro de dépôt: 17804624.9
(22) Date de dépôt: 07.11.2017
(51) Int. Cl.: B29C 45/14, B60R 21/20

(54) **PROCÉDÉ DE FABRICATION PAR INJECTION D'UNE PIÈCE EN MATIÈRE PLASTIQUE COMPORTANT UNE FACE TECHNIQUE ET INCORPORANT UN ÉLÉMENT DE RENFORT**
VERFAHREN ZUR HERSTELLUNG EINES KUNSTSTOFFTEILS MIT EINER TECHNISCHEN VORDERSEITE UND MIT EINEM VERSTÄRKUNGSELEMENT MITTELS INJEKTION
PROCESS FOR MANUFACTURING, BY INJECTION, A PLASTIC PART COMPRISING A TECHNICAL FACE AND INCORPORATING A REINFORCING ELEMENT

(30) Priorité: 08.11.2016 FR 1660805
(43) Date de publication de la demande: 18.09.2019
(73) Titulaire: NOVARES France, 92140 Clamart (FR)
(72) Inventeur: BACELOS, François, 06300 Nice (FR); MEVIL-BLANCHE, Alain, 06500 Menton (FR); ASENSIO, Louis, 06500 Menton (FR)
(74) Mandataire: Germain Maureau
(86) Numéro de dépôt international: PCT/FR2017/053032
(87) Numéro de publication internationale: WO 2018/087463

(56) Documents cités:
- EP-A1- 3 078 475
- DE-A1-102011 120 986

## Description

La présente invention concerne un procédé de fabrication d'une pièce en matière plastique pour véhicule automobile.

Un véhicule automobile comprend un grand nombre de pièces en matière plastique que l'on peut trouver, soit à l'extérieur du véhicule (pièces telles que des baguettes latérales de protection, pare-choc, becquets...), soit dans le compartiment moteur (pièces telles que des répartiteurs d'air, des couvre culasses, des carters d'huile, ...), soit dans l'habitacle du véhicule (pièces telles que des ébénisteries, des éléments de planche de bord, des éléments de siège,...).

Ces pièces peuvent être amenées à subir, durant leur cycle de vie des contraintes mécaniques sévères et, en cas de rupture, peuvent créer un risque pour des occupants du véhicule ou des personnes se trouvant à proximité du véhicule.

En cas de rupture d'une pièce en matière plastique, il convient d'empêcher, en effet, que celle-ci ne soit éjectée ou ne se fractionne en de multiples sous éléments qui sont susceptibles de blesser les occupants du véhicule, des personnes présentes à proximité du véhicule ou d'endommager d'autres composants de sécurité.

La rupture d'une pièce en matière plastique, par exemple dans l'habitacle, peut notamment se produire en cas de déploiement d'un coussin gonflable (ou Airbag).

De façon conventionnelle, le coussin gonflable est masqué par une pièce dite d'ébénisterie en matière plastique. Il peut être prévu que la pièce d'ébénisterie qui masque un coussin gonflable soit dotée de lignes de rupture contrôlée qui permettent le déploiement du coussin gonflable. En revanche, il est tout à fait délétère que la pièce d'ébénisterie se fractionne de manière incontrôlée lors du déploiement d'un coussin gonflable.

Or, les véhicules actuels sont dotés d'un nombre important de coussins gonflages que l'on trouve au niveau du volant, de la planche de bord, des parois latérales du véhicule qui sont chacun masqués par une pièce d'ébénisterie en matière plastique. En cas d'accident d'un véhicule causant le déploiement de coussins gonflables, on comprend que chacun des coussins gonflables peut être la source d'une rupture incontrollée et, potentiellement, dangereuse pour un occupant, des pièces d'ébénisterie qui masquent les coussins gonflables.

Par ailleurs, dans une optique d'amélioration de la sécurité des occupants, les normes de sécurité deviennent de plus en plus drastiques : les coussins gonflages peuvent présenter des volumes d'air de plus en plus importants ou peuvent être propulsés par des charges explosives plus importantes pour être déployés plus rapidement. Cela contribue à accroitre la sécurité des occupants mais sollicitent plus fortement les pièces d'ébénisterie et donc accroit le risque de rupture incontrollée de ces mêmes pièces du fait des plus fortes sollicitations appliquées.

Si l'on définit une pièce d'ébénisterie par sa face d'aspect qui est tournée vers l'habitacle et, par sa face technique opposée à la face d'aspect et donc, en regard du coussin gonflable, il est connu de renforcer une pièce d'ébénisterie en apposant des éléments de renforts sur sa face technique.

Les éléments de renfort en question peuvent prendre la forme de pellicules, de patchs adhésifs ou de patchs surmoulés qui viennent donc doubler la face technique pour lui permettre d'éviter l'éjection de fragments des pièces plastiques consécutivement au déploiement du coussin gonflable.

On connait par le document EP 3 078 475 et par le document DE 10 2011120986 des procédés de réalisation de pièces en matière plastique dotées de renfort fibreux.

Le renfort de la face technique pose, en pratique, d'importantes difficultés techniques.

En premier lieu, le dépôt de patchs de renfort est complexe à mettre en œuvre car le positionnement et le maintien de ces patchs dans un outillage de moulage de pièces plastiques est difficile à garantir et à reproduire. Le positionnement et le maintien dans l'outillage de moulage impose des cinématiques complexes et des moyens mécaniques à prévoir dans l'outillage de moulage (aiguilles, aspiration...).

En second lieu, le dépôt d'un film de renfort est complexe car la face technique est dotée d'organes techniques. Contrairement à la face d'aspect qui est lisse, la face technique est au contraire pourvue d'organes techniques tels que des clips de fixation, des portes agrafes de fixation ou des nervures de renfort qui imposent que le film de renfort doit contourner ces organes techniques pour doubler la face technique. Le recouvrement de la totalité de la face technique par le film de renfort s'avère impossible, le film de renfort ne pouvant recouvrir que certaines zones de la face technique.

Sachant que la diminution de l'épaisseur des pièces d'ébénisterie est de plus en plus recherchée pour une problématique de réduction de poids dans le but d'une réduction de consommation des véhicules, il apparait que la gestion des pièces en matière plastique aménées à subir des contraintes mécaniques fortes n'est pas satisfaisante.

Dans ce contexte technique, l'invention se propose d'apporter une solution au problème de la réalisation de pièces en matière plastique devant subir de fortes sollicitations mécaniques.

L'invention concerne un procédé de fabrication d'une pièce en matière plastique ayant une première face technique et une seconde face, dans un outillage comprenant une première coquille destinée à former la première face, dotée d'empreintes destinées à former des organes techniques de la face technique et une seconde coquille destinée à former la seconde face , la première coquille et la seconde coquille délimitant une cavité formant la pièce, caractérisé en ce que le procédé comprend les étapes suivantes :
- Fournir un élément de renfort poreux ;
- Draper l'élément de renfort sur la première coquille en recouvrant la surface de la première coquille et les empreintes destinées à former les organes techniques, l'élément de renfort étant en surplomb des empreintes ;
- Retenir l'élément de renfort sur la première coquille par des moyens de retenue ;
- Rapprocher la première coquille et la seconde coquille ;
- Injecter une matière plastique pour remplir la cavité, la matière plastique traversant l'élément de renfort poreux pour remplir des empreintes destinées à former les organes techniques ;
- Ecarter les première et seconde coquilles ;
- Ejecter la pièce plastique.

Ainsi, l'invention fournit un procédé permettant de réaliser une pièce de forme complexe et dotée d'organes techniques qui incorpore un élément de renfort. Le procédé selon l'invention prévoit notamment un positionnement et une retenue de l'élément de renfort dans le moule ce qui confère au procédé une grande répétabilité. En outre, la mise en œuvre d'un élément de renfort poreux permet lors de l'opération d'injection de matière plastique de remplir des empreintes qui vont former des organes techniques, ce qui autorise un drapage complet de la face technique de la pièce.

De façon préférée, l'élément de renfort comprend un textile tissé ayant un coefficient d'ouverture de 50%.

En outre, le textile peut être un textile à base de polyamide ayant un grammage de l'ordre de 60g/m².

Selon une forme d'exécution de l'invention, la retenue de l'élément de renfort poreux est réalisée par un adhésif interposé entre l'élément de renfort poreux et la première coquille.

Dans une première variante, l'adhésif est déposé sur l'élément de renfort, élément de renfort étant ensuite positionnée sur la première coquille.

Selon une autre variante, l'adhésif est déposé sur la première coquille, l'élément de renfort étant ensuite positionné sur la première coquille.

De préférence, l'adhésif est formé à base d'un adhésif aqueux.

Selon une autre forme de réalisation, la retenue de l'élément de renfort sur la première coquille se fait par des moyens électrostatiques.

Selon une autre forme de réalisation la retenue de l'élément de renfort sur la première coquille se fait par des moyens électromagnétiques.

De préférence, la seconde face de la pièce constitue sa face d'aspect qui peut être tournée vers l'habitacle du véhicule.

Pour sa bonne compréhension, l'invention est décrite en référence aux dessins ci-annexés représentant à titre d'exemple non limitatif une forme de réalisation de l'invention :
- La figure 1 montre en perspective une pièce en matière plastique destinée à équiper un véhicule automobile ;
- La figure 2 montre en coupe une pièce en matière plastique selon l'invention ;
- Les Figures 3 à 8 montrent les étapes de fabrication de la pièce montrée aux figures 1 et 2 du procédé selon l'invention.

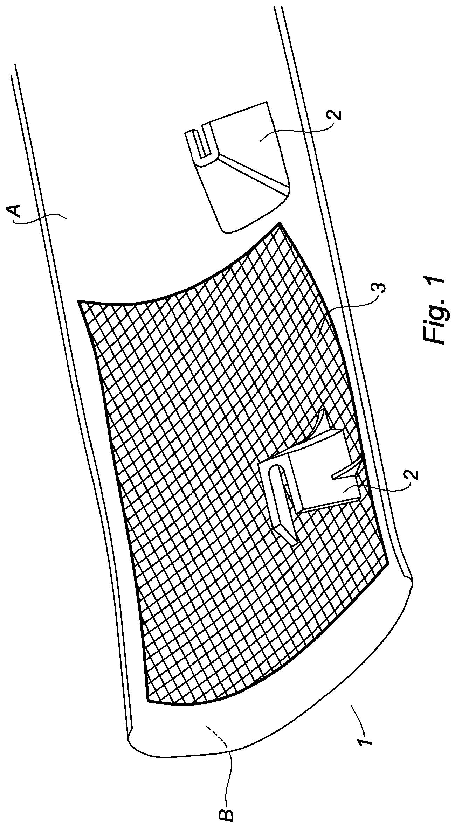

La figure 1 montre une pièce d'ébénisterie 1 destinée à assurer l'habillage de l'habitacle d'un véhicule. Si l'invention est décrite en référence à une pièce d'ébénisterie, l'invention concerne toutes pièces en matière plastique destinées à être embarquées dans un véhicule automobile.

La pièce d'ébénisterie 1 présente une première face et une seconde face opposée à la première.

La première face est une face dite technique A, qui embarque un certain nombre d'organes techniques tels, par exemple, des clips de fixation, des portes agrafes 2 ou des réseaux de nervures et la seconde face est une face dite d'aspect B, qui est en regard de l'habitacle.

Comme on peut le voir sur la figure 1, la pièce d'ébénisterie 1 présente une forme générale gauche relativement complexe qui est préférentiellement réalisée dans une matière thermoformable et notamment thermoplastique telle que, par exemple, du polypropylène ou de l'ABS-PC.

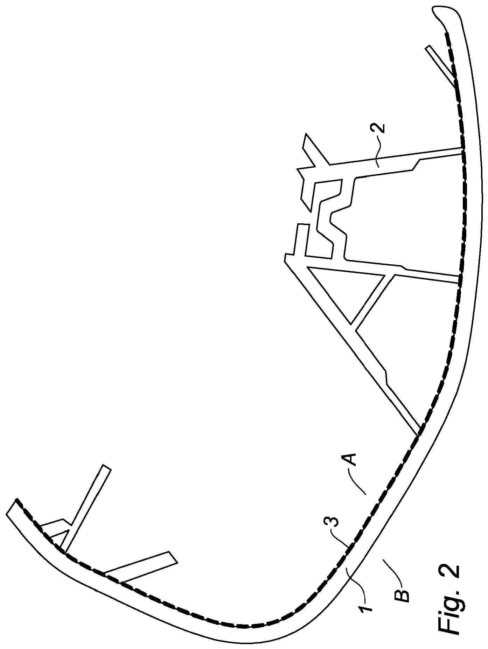

La figure 1 et la figure 2 font apparaitre une caractéristique importante de la pièce d'ébénisterie 1 selon l'invention qui est la présence d'un élément de renfort 3 qui vient draper la totalité de la surface technique A, à l'exception, dans l'exemple représenté à la figure 1 d'une bande limitée à quelques millimètres des arêtes de bordure de pièce.

L'élément de renfort 3 est constitué d'un matériau poreux qui, comme on le verra plus loin, permet à la matière plastique qui forme la pièce d'ébénisterie 1 de fluer au travers de ce même élément de renfort 3 lors de l'injection.

L'élément de renfort peut être, par exemple, formé par un textile tissé à base de polyamide ayant un grammage de 60 g/m2 et d'épaisseur de 180 micromètres.

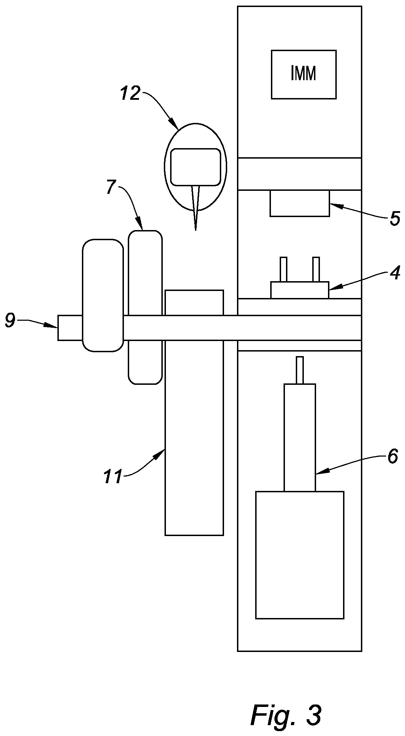

Le procédé qui permet de réaliser la pièce d'ébénisterie 1 est mis en œuvre dans un outillage conventionnel de moulage par injection que l'on peut voire à la figure 3 qui comprend une coquille fixe 4 et une coquille mobile 5 entre lesquelles est définie une cavité qui forme la pièce à mouler. L'outillage est équipé d'une unité d'injection 6 en amont et d'un convoyeur 11 pour les pièces finies en aval.

Le procédé comprend les étapes suivantes.

L'élément de renfort 3 peut être conditionné initialement en rouleau ou en pile de portions individuelles.

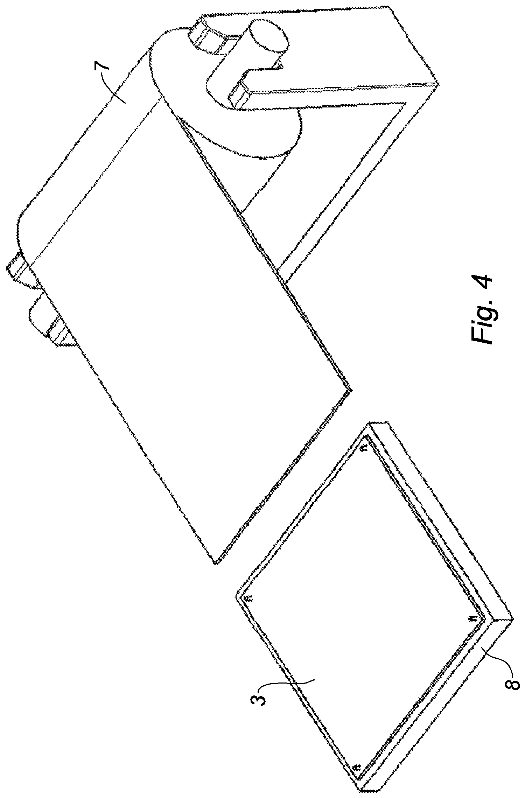

Dans un premier temps comme le montre la Figure 4, l'élément de renfort 3 qui, dans l'exemple représenté sur cette figure, provient d'un rouleau 7 est déposé sur une table 8.

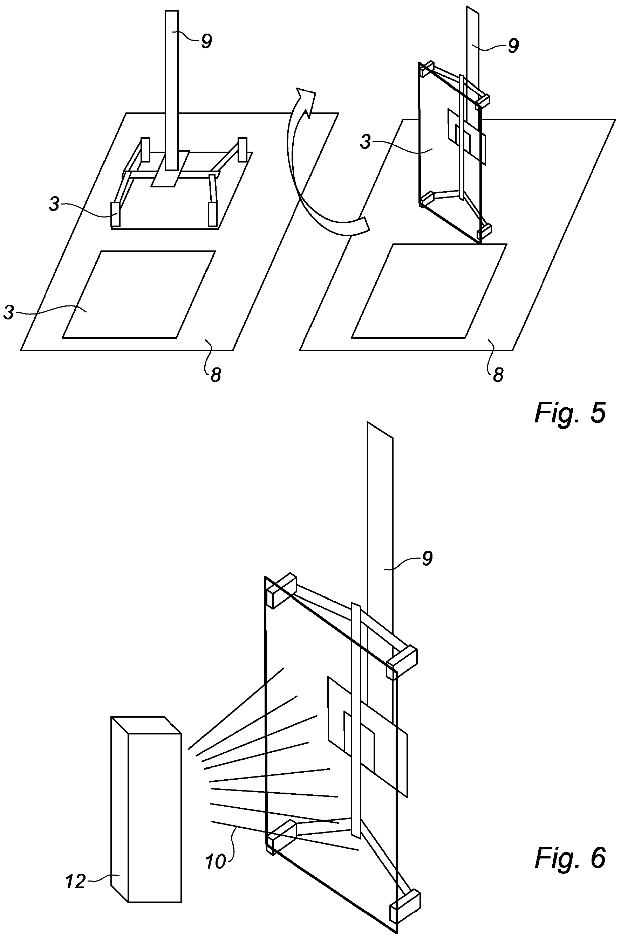

A partir de sa position sur la table 8, l'élément de renfort 3 peut être déplacé par un bras préhenseur 9 comme on peut le voir à la Figure 5.

L'élément de renfort 3 est enduit d'un adhésif 10. L'adhésif 10 est, de préférence, une colle aqueuse qui peut être déposée sur l'élément de renfort 3 par pulvérisation par un système de pulvérisation 12 comme cela est illustré à la Figure6. L'adhésif 10 pourrait également être déposé par enduction par rouleau.

Dans une forme de réalisation, l'élément de renfort 3 pourrait être préencollé.

Une phase de séchage partiel du film d'adhésif suit. Cette phase de séchage peut se produire à l'air ambiant ou peut être accélérée par apport de chaleur.

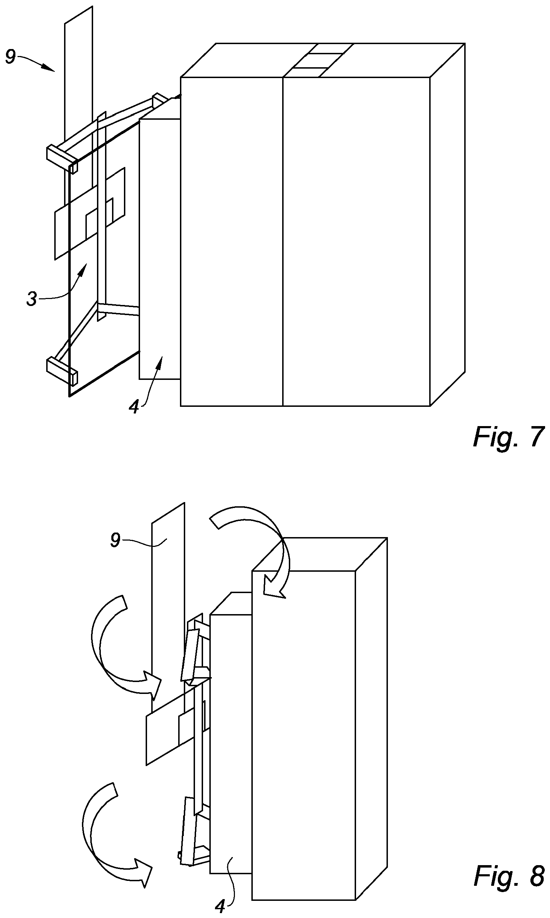

L'élément de renfort 3 est ensuite placé dans l'outillage de moulage comme le représentent les figures 7 et 8.

Dans d'autres formes de réalisation de l'invention, il peut être envisagé que la retenue de l'élément de renfort 3 soit réalisée par d'autres moyens qu'un adhésif 10 préencollé, pulvérisé sur l'élément de renfort 3 ou pulvérisé sur le la coquille 4.

Il est, en effet, envisagé que la retenue de l'élément de renfort 3 soit réaliser par des moyens électrostatiques. Pour cela, l'élément de renfort 3 peut être ionisé préalablement à sa pose contre la coquille 4.

L'élément de renfort 3 peut également être retenu par des moyens électromagnétiques. Pour cela, l'élément de renfort 3 peut être pourvu d'un apprêt chargé de particules métalliques et l'outillage peut être doté d'éléments électromagnétiques qui assurent la retenue de l'élément de renfort 3 contre la coquille 4.

L'élément de renfort 3 réalise un drapage qui peut s'étendre sur la totalité de la coquille qui va former la face technique A. Un point qu'il est important de noter est que la coquille 4 qui va former la face technique A est pourvue des empreintes qui vont elles-mêmes former les nervures et autres portes agrafes de cette face technique A. L'élément de renfort 3 est déposé en surplomb de ces empreintes. En d'autres termes, l'élément de renfort 3 est apposé et est maintenu par l'adhésif sur la coquille formant la face technique A en couvrant les empreintes qui forment les organes techniques : nervures et organes de fixation.

L'élément de renfort 3 est positionné de manière précise et répétable, par exemple, par un bras de robot 9 et reste en position dans l'outillage par l'adhésif 10 dont il est enduit. Par ailleurs, on peut noter que l'élément de renfort 3 peut être positionné sur des formes complexes car il est directement apposé sur les formes en question et s'affranchit donc de moyens de retenue mécanique.

Dans une variante, l'adhésif est pulvérisé directement sur la surface de la coquille et l'élément de renfort 3 est ensuite positionné sur la coquille et est maintenu en position par l'adhésif.

L'outillage est ensuite fermé par rapprochement des deux coquilles 4 et 5 et la matière plastique est injectée dans la cavité de moulage, étant entendu que l'élément de renfort 3 est retenu contre la surface de l'une des coquilles par l'adhésif 10. On peut noter que l'outillage est dépourvu de tout équipement spécifique de type aiguilles ou autres pour assurer le maintien en place de l'élément de renfort. Lors de l'injection, l'élément de renfort 3 qui est maintenu en place par l'adhésif 10 ne plisse pas ni ne migre au-delà de la face technique sous l'effet de l'injection de la matière plastique.

En cela, le procédé selon l'invention se distingue des techniques de l'art antérieur dans lesquels une couche de renfort est maintenue par des moyens mécaniques qui créent des tensions dans la couche de renfort qui s'avèrent délétères pour la qualité finale de la pièce.

Au cours de l'injection, la matière plastique traverse l'élément de renfort 3. Cela est rendu possible par le fait que l'élément de renfort 3 est poreux et ne n'oppose pas à ce que la matière plastique traverse le maillage de celle-ci. Cela est particulièrement important car la matière plastique à l'état fondu peut ainsi traverser l'élément de renfort pour remplir les cavités qui forment les nervures et autres portes agrafes qui sont drapées par ce même élément de renfort.

Après injection de la matière plastique, les coquilles sont écartées et la pièce d'ébénisterie 1 est éjectée. La pièce d'ébénisterie 1 ainsi obtenue ne nécessite aucune opération de reprise de type découpe ou arasage.

Au cours de l'injection de la matière plastique, l'adhésif se désagrège et ne crée pas d'encrassement ni de pollution de l'outillage.

Il est à noter que le même outillage peut réaliser indifféremment des pièces avec un élément de renfort ou des pièces sans élément de renfort car l'outillage n'est pas impacté par la présence ou l'absence d'un élément de renfort dans la pièce.

L'invention fournit ainsi un procédé qui permet de réaliser une pièce en matière plastique complexe qui incorpore un élément de renfort.

La pièce ainsi formée présente une résistance aux chocs qui, à masse égale, est très sensiblement améliorée.

Ce procédé est donc particulièrement mais non exclusivement destiné à la fabrication de pièces automobiles qui sont susceptibles de connaitre des contraintes importantes telles que des pièces d'ébénisterie masquant des coussins gonflables mais également des pièces telles que boites de dégazage, répartiteur d'air, carter d'huile...

Bien entendu, l'invention n'est pas limitée à la forme de réalisation décrite ci-dessus à titre d'exemple non limitatif mais elle en embrasse toutes les variantes de réalisation.

## Revendications

1. Procédé de fabrication d'une pièce en matière plastique (1) ayant une première face technique et une seconde face, dans un outillage comprenant une première coquille (4) destinée à former la première face dotée d'empreintes destinées à former des organes techniques de la face technique et une seconde coquille (5) destinée à former la seconde face , la première coquille (4) et la seconde coquille (5) délimitant une cavité formant la pièce (1), **caractérisé en ce que** le procédé comprend les étapes suivantes :
- Fournir un élément de renfort (3) poreux ;
- Draper l'élément de renfort (3) sur la première coquille (4) en recouvrant la surface de la première coquille et les empreintes destinées à former les organes techniques, l'élément de renfort (3) étant en surplomb des empreintes ;
- Retenir l'élément de renfort (3) sur la première coquille par des moyens de retenue ;
- Rapprocher la première coquille (4) et la seconde coquille (5) ;
- Injecter une matière plastique pour remplir la cavité, la matière plastique traversant l'élément de renfort poreux (3) pour remplir des empreintes destinées à former les organes techniques ;
- Ecarter les première et seconde coquilles (4) et (5) ;
- Ejecter la pièce plastique (1).

2. Procédé de fabrication d'une pièce en matière plastique selon la revendication 1, **caractérisé en ce que** l'élément de renfort (3) comprend un textile tissé ayant un coefficient d'ouverture de 50%.

3. Procédé de fabrication d'une pièce en matière plastique selon la revendication 2 **caractérisé en ce que** le textile est un textile à base de polyamide ayant un grammage de l'ordre de 60g/m².

4. Procédé de fabrication d'une pièce en matière plastique selon l'une des revendications 1 à 3, **caractérisé en ce que** la retenue de l'élément de renfort poreux (3) est réalisée par un adhésif (10) interposé entre l'élément de renfort poreux (3) et la première coquille (4).

5. Procédé de fabrication d'une pièce en matière plastique selon la revendication 4, **caractérisé en ce que** l'adhésif (10) est déposé sur l'élément de renfort (3), l'élément de renfort (3) étant ensuite positionné sur la première coquille.

6. Procédé de fabrication d'une pièce en matière plastique selon la revendication 4, **caractérisé en ce que** l'adhésif (10) est déposé sur la première coquille (4), l'élément de renfort (3) étant ensuite positionnée sur la première coquille (4).

7. Procédé de fabrication d'une pièce en matière plastique selon la revendication 4, **caractérisé en ce que** l'adhésif (10) est préencollé sur l'élément de renfort (3), l'élément de renfort (3) préencollé étant directement positionné sur la première coquille (4).

8. Procédé de fabrication d'une pièce en matière plastique selon l'une des revendications 1 à 5, **caractérisé en ce que** l'adhésif (10) est formé à base d'un adhésif aqueux.

9. Procédé de fabrication d'une pièce en matière plastique, selon l'une des revendications 1 à 4, **caractérisé en ce que** la retenue de l'élément de renfort (3) sur la première coquille (4) se fait par des moyens électrostatiques.

10. Procédé de fabrication d'une pièce en matière plastique, selon l'une des revendications 1 à 4, **caractérisé en ce que** la retenue de l'élément de renfort (3) sur la première coquille (4) se fait par des moyens électromagnétiques.

11. Procédé de fabrication d'une pièce en matière plastique, selon l'une des revendications 1 à 10, **caractérisé en ce que** la seconde face de la pièce constitue sa face d'aspect.

## Patentansprüche

1. Verfahren zur Herstellung eines Kunststoffteils (1), das eine erste technische Seite und eine zweite Seite aufweist, in einem Werkzeug, das eine erste Kokille (4) umfasst, die dazu bestimmt ist, die erste Seite zu bilden, die mit Abdrücken versehen ist, die dazu bestimmt sind, technische Organe der technischen Seite zu bilden, und eine zweite Kokille (5), die dazu bestimmt ist, die zweite Seite zu bilden, wobei die erste Kokille (4) und die zweite Kokille (5) einen Hohlraum begrenzen, der das Teil (1) bildet, **dadurch gekennzeichnet, dass** das Verfahren die folgenden Schritte umfasst:
- Bereitstellen eines porösen Verstärkungselements (3);
- Drapieren des Verstärkungselements (3) auf der ersten Kokille (4) durch Abdecken der Oberfläche der ersten Kokille und der Abdrücke, die dazu bestimmt sind, die technischen Organe zu bilden, wobei das Verstärkungselement (3) über die Abdrücke überhängend ist;
- Rückhalten des Verstärkungselements (3) auf der ersten Kokille durch Rückhaltemittel;
- Annähern der ersten Kokille (4) und der zweiten Kokille (5);
- Injizieren eines Kunststoffmaterials zum Füllen des Hohlraumes, wobei das Kunststoffmaterial das poröse Verstärkungselement (3) durchquert, um die Abdrücke, die dazu bestimmt sind, die technischen Organe zu bilden, zu füllen;
- Entfernen der ersten und zweiten Kokille (4) und (5);
- Ausstoßen des Kunststoffteils (1).

2. Verfahren zur Herstellung eines Kunststoffteils nach Anspruch 1, **dadurch gekennzeichnet, dass** das Verstärkungselement (3) ein gewobenes Textil umfasst, das einen Öffnungskoeffizienten von 50 % aufweist.

3. Verfahren zur Herstellung eines Kunststoffteils nach Anspruch 2, **dadurch gekennzeichnet, dass** das Textil ein Textil auf Basis von Polyamid ist, das ein Flächengewicht in der Größenordnung von 60 g/m² aufweist.

4. Verfahren zur Herstellung eines Kunststoffteils nach einem der Ansprüche 1 bis 3, **dadurch gekennzeichnet, dass** das Rückhalten des porösen Verstärkungselements (3) durch ein Klebemittel (10) realisiert wird, das zwischen dem porösen Verstärkungselement (3) und der ersten Kokille (4) eingebracht ist.

5. Verfahren zur Herstellung eines Kunststoffteils nach Anspruch 4, **dadurch gekennzeichnet, dass** das Klebemittel (10) auf das Verstärkungselement (3) abgeschieden wird, wobei das Verstärkungselement (3) danach auf der ersten Kokille positioniert wird.

6. Verfahren zur Herstellung eines Kunststoffteils nach Anspruch 4, **dadurch gekennzeichnet, dass** das Klebemittel (10) auf die erste Kokille (4) abgeschieden wird, wobei das Verstärkungselement (3) danach auf der ersten Kokille (4) positioniert wird.

7. Verfahren zur Herstellung eines Kunststoffteils nach Anspruch 4, **dadurch gekennzeichnet, dass** das Klebemittel (10) auf dem Verstärkungselement (3) vorgeklebt wird, wobei das vorgeklebte Verstärkungselement (3) direkt auf der ersten Kokille (4) positioniert wird.

8. Verfahren zur Herstellung eines Kunststoffteils nach einem der Ansprüche 1 bis 5, **dadurch gekennzeichnet, dass** das Klebemittel (10) auf Basis eines wässrigen Klebemittels gebildet wird.

9. Verfahren zur Herstellung eines Kunststoffteils nach einem der Ansprüche 1 bis 4, **dadurch gekennzeichnet, dass** das Rückhalten des Verstärkungselements (3) auf der ersten Kokille (4) anhand elektrostatischer Mittel erfolgt.

10. Verfahren zur Herstellung eines Kunststoffteils nach einem der Ansprüche 1 bis 4, **dadurch gekennzeichnet, dass** das Rückhalten des Verstärkungselements (3) auf der ersten Kokille (4) anhand elektromagnetischer Mittel erfolgt.

11. Verfahren zur Herstellung eines Kunststoffteils nach einem der Ansprüche 1 bis 10, **dadurch gekennzeichnet, dass** die zweite Seite des Teils seine Ansichtsseite darstellt.

## Claims

1. A method for manufacturing a part made of a plastic material (1) having a first technical face and a second face, in a tooling comprising a first shell (4) intended to form the first face provided with impressions intended to form technical members of the technical face and a second shell (5) intended to form the second face, the first shell (4) and the second shell (5) delimiting a cavity forming the part (1), **characterized in that** the method comprises the following steps of:
- providing a porous reinforcing element (3);
- draping the reinforcing element (3) over the first shell (4) by covering the surface of the first shell and the impressions intended to form the technical members, the reinforcing element (3) overhanging the impressions;
- retaining the reinforcing element (3) on the first shell by retaining means;
- bringing the first shell (4) and the second shell (5) together;
- injecting a plastic material to fill the cavity, the plastic material passing through the porous reinforcing element (3) to fill impressions intended to form the technical members;
- moving apart the first and second shells (4) and (5);
- ejecting the plastic part (1).

2. The method for manufacturing a part made of a plastic material according to claim 1, **characterized in that** the reinforcing element (3) comprises a woven textile having an opening coefficient of 50%.

3. The method for manufacturing a part made of a plastic material according to claim 2 **characterized in that** the textile is a polyamide-based textile having a basis weight in the range of 60 g/m².

4. The method for manufacturing a part made of a plastic material according to any of claims 1 to 3, **characterized in that** the retention of the porous reinforcing element (3) is achieved by an adhesive (10) interposed between the porous reinforcing element (3) and the first shell (4).

5. The method for manufacturing a part made of a plastic material according to claim 4, **characterized in that** the adhesive (10) is deposited over the reinforcing element (3), the reinforcing element (3) then being positioned on the first shell.

6. The method for manufacturing a part made of a plastic material according to claim 4, **characterized in that** the adhesive (10) is deposited over the first shell (4), the reinforcing element (3) then being positioned on the first shell (4).

7. The method for manufacturing a part made of a plastic material according to claim 4, **characterized in that** the adhesive (10) is pre-glued on the reinforcing element (3), the pre-glued reinforcing element (3) being directly positioned on the first shell (4).

8. The method for manufacturing a part made of a plastic material according to any of claims 1 to 5, **characterized in that** the adhesive (10) is formed based on an aqueous adhesive.

9. The method for manufacturing a part made of a plastic material, according to any of claims 1 to 4, **characterized in that** the retention of the reinforcing element (3) on the first shell (4) is achieved through electrostatic means.

10. The method for manufacturing a part made of a plastic material, according to any of claims 1 to 4, **characterized in that** the retention of the reinforcing element (3) on the first shell (4) is achieved through electromagnetic means.

11. The method for manufacturing a part made of a plastic material, according to any of claims 1 to 10, **characterized in that** the second face of the part constitutes its visible face.
